Europäisches Patentamt

(19) European Patent Office

Office européen des brevets

(11) Publication number: **0 165 478**
**B1**

## EUROPEAN PATENT SPECIFICATION

(45) Date of publication of patent specification: **03.02.88**

(51) Int. Cl.⁴: **B 01 D 13/01**

(21) Application number: **85106081.4**

(22) Date of filing: **17.05.85**

(54) A method of producing a device including a bundle of hollow fibers.

(30) Priority: **18.06.84 SE 8403247**

(43) Date of publication of application:
**27.12.85 Bulletin 85/52**

(45) Publication of the grant of the patent:
**03.02.88 Bulletin 88/05**

(84) Designated Contracting States:
**BE CH DE FR GB IT LI NL**

(56) References cited:
**DE-A-2 456 493**
**US-A-3 442 002**
**US-A-3 499 062**
**US-A-4 049 765**
**US-A-4 105 731**

(73) Proprietor: **GAMBRO DIALYSATOREN K.G.**
**Postfach 1323**
**D-7450 Hechingen (DE)**

(72) Inventor: **Beck, Bernd Andreas Walter**
**Panoramastrasse 25**
**D-7450 Hechingen-Stein (DE)**
Inventor: **Spranger, Kurt**
**Obere Strasse 43**
**D-7403 Ammerbuch-Entringen (DE)**

(74) Representative: **Boberg, Nils Gunnar Erik**
**Gambro AB Patent Department Box 10101**
**S-220 10 Lund (SE)**

Courier Press, Leamington Spa, England.

## Description

The present invention relates to a method of potting a bundle of open-ended hollow fibers in an outer housing comprising arranging the bundle in the housing with the open ends of the hollow fibers at opposite ends of the housing, enclosing each end of the housing in a casting mold supplying liquid potting material to each casting mold so as to penetrate into and around the fibers at each end, the penetration being controlled in such a way that it is less into the fibers than around them so that after potting the fibers may be re-opened by a cut between the surfaces defining the respective penetration depths.

Hollow fibre bundles may be used for different kinds of medical treatment such as hemodialysis, hemofiltration, plasmapheresis and immunotherapy. Other fields of use are for instance dialysis in general and filtration in general, for example in connection with cleaning of sea water.

In potting hollow fibre bundles of the above kind each end of the housing with a bundle of fibers placed therein is normally enclosed in a casting mold to which the material for the adjacent end wall is fed in a liquid condition penetrating into and around the fibers. The penetration is so controlled by the casting that the penetration into the fibers is less than around the fibers, making it possible to open the openings of the fibers by making a cut between the surfaces restricting the two different penetration depths, respectively.

This control may be made in different ways. According to a known method the fiber ends are first closed by means of a special material, for example by means of so called "hot melt". After this the end wall itself is cast in a second step.

According to an alternative method the two end walls are instead molded at the same time in such a way that the air volume enclosed in a fiber at the atmosphere pressure is compressed providing an increase of the pressure which reduces further penetration.

In order to further control the penetration depths in and around the fibers, respectively, this method is often combined with a rotational movement around an axis essentially perpendicular to the longitudinal axis of the housing. By such a movement the centrifugal forces influence the penetration depths as well in as around the fibers.

A more detailed description of such a centrifugal casting can be found in for instance the US Patents 3 339 341, 3 442 002, 3 492 698 and 3 499 062.

Another method of providing a uniform penetration by using two liquids in combination with a compressed gas is described in the US patents 4 049 765 and 4 105 731. According to said method a bundle of fibers is dipped into a solidifiable liquid which upper surface is controlled by a second liquid which might be exposed to the pressure of the compressed gas.

In spite of the known control methods it has, however, been difficult to provide for instance dialysers in a reproduceable way within narrow tolerance limits. Furthermore it has been necessary to permit a relatively far-reaching penetration into the fibers and due to this penetration a relatively large waste of casting material as well as fiber material occurred in connection with the opening of the fibers.

The above drawbacks are eliminated according to the present invention by controlling the respective penetration depth by exposing the interior of the housing and the casting molds to a positive pressure before the liquid potting material is supplied, whereby an increased pressure is created within the fibers.

One important advantage gained thanks to the invention is that, when the fibers have been closed in both ends, you get one pressure within the fibers and a second pressure outside the fibers, which might be controlled independent of the first pressure. Consequently, you may provide a pressure difference which provides a certain desired penetration into the fibers and a second desired penetration between the fibers.

The penetration is preferably controlled by a combination of the above positive pressure and centrifugal forces provided by a rotation around an axis essentially perpendicular to the longitudinal axis of the housing, i.e. in combination with a centrifugal casting of the kind described in the four above first mentioned US patents.

The inner positive pressure in the housing is preferably reduced or entirely eliminated after the ends of the fibers have been closed by the liquid potting material for the end walls.

In order to hasten the solidifying process heated air is preferably used for providing a positive pressure. This heated air will also reduce the formation of bubbles within the casting material. The formation of such bubbles may for instance be caused by a later expension of not heated air inside the fibers during the centrifugal rotation.

In connection with the production of for example dialysers the fibers used are often made of regenerated cellulose, for example Cuprophan®, and embedded in polyurethane. By such a production it is suitable to keep a temperature of about 50°C, which temperature facilitates the casting without damaging the fiber material.

In connection with especially the production of dialysers or filters the positive pressure may be supplied via one or more side openings in the housing, which normally are arranged between the end walls and intended for the supply to or the removal of the dialysis liquid and/or the filtrate.

The pressure within the housing may be controlled through one of the side openings mentioned while all the other openings are kept entirely closed. However, this has appeared to be difficult to realize in practice. Preferably, the pressure is therefore instead controlled by blowing air through one opening and by causing the air to flow out freely through the opposite opening. By a suitable combination of the blowing pressure and the resistance in the blow out opening you can achieve exactly the desired pressure within the housing.

## Short Description of the Drawings

Fig. 1 shows as an example a dialyser which may be manufactured by means of the method according to the present invention.

Fig. 2 shows an enlarged detail broken out from said dialyser.

Figs. 3a—3c, finally, are intended to schematically illustrate the production method according to the invention.

## Preferred Embodiment of the Method According to the Invention

Due to the fact that the present invention preferably is intended for the production of dialysers and similar devices it will in the following be described under reference to the production of dialysers.

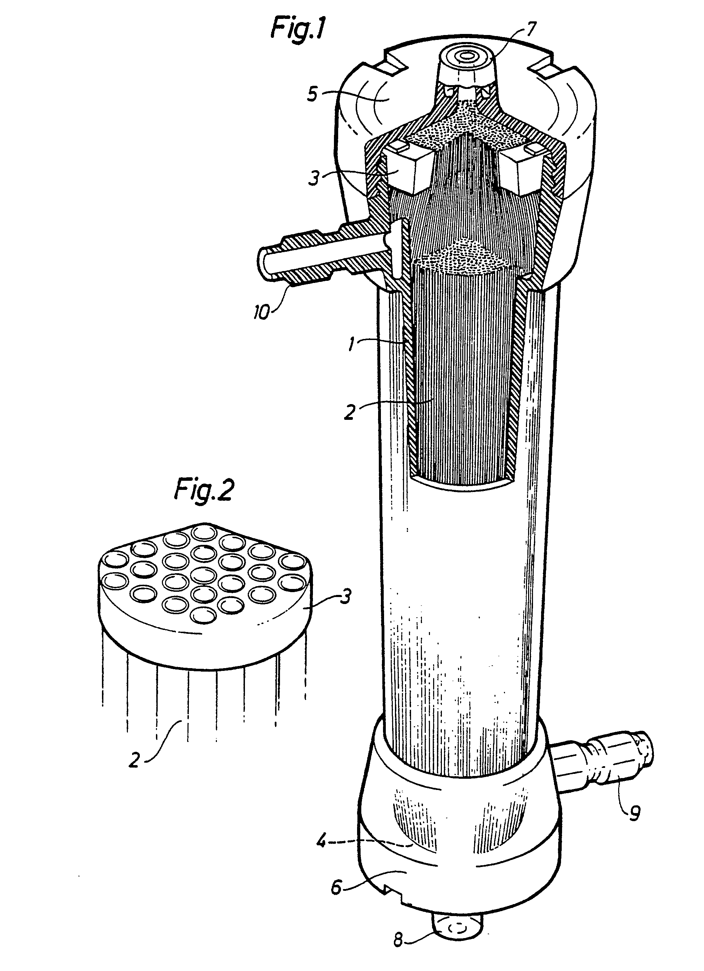

Fig. 1 therefore shows a dialyser which may be produced by means of the method according to the invention. This dialyser includes an outer cover or housing 1 with a bundle 2 of fibers arranged therein. The ends of the fibers are embedded in two opposite end walls 3 and 4. A segment broken out from the end wall 3 is shown in a larger scale in Fig. 2. The dialyser shown includes furthermore two lid like end covers 5 and 6 with an inlet 7 and an outlet 8, respectively, for the liquid which is to be dialyzed, for example blood. Furthermore, the housing includes an inlet 9 and an outlet 10, respectively, for the dialysis liquid.

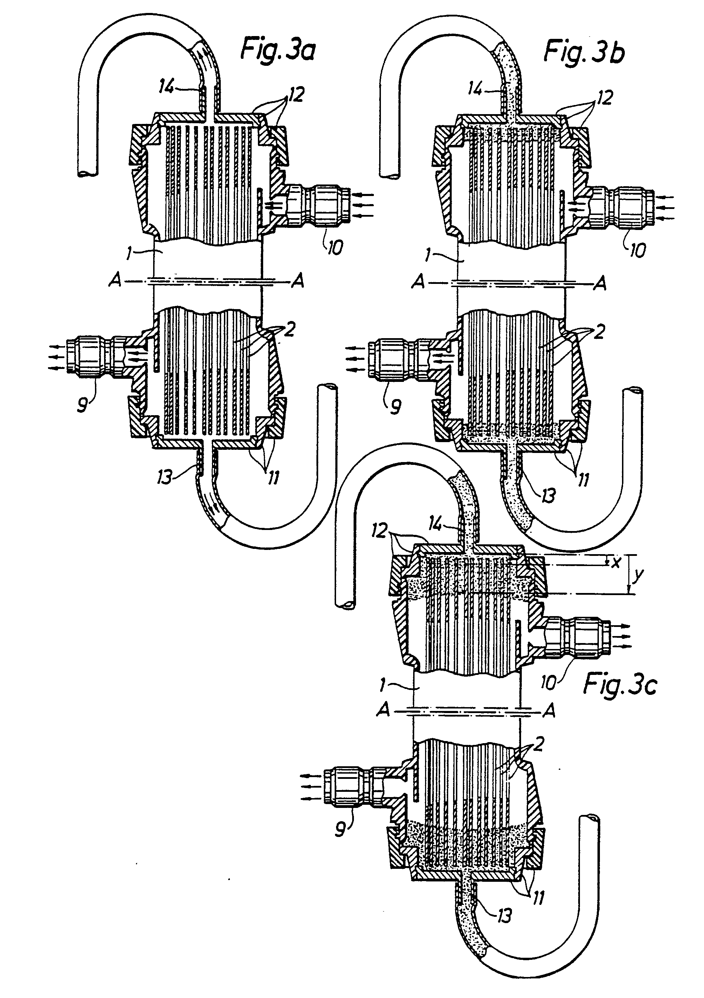

Fig. 3a—3c are as mentioned above intended to illustrate the production method according to the invention. In these figures the housing 1 therefore is shown schematically together with its inlet 9 and outlet 10, respectively. Within the housing 1 the bundle of fibers 2 is shown. When this bundle is inserted in the housing the two ends of said housing are provided with two casting molds 11 and 12, respectively, with inlets 13 and 14, respectively, for the casting material used. If fibers of regenerated cellulose, for example Cuprophan® are intended to be embedded, polyurethane is preferably used as casting material. This material penetrates into the fibers to a depth X and around the fibers to a depth Y (Fig. 3c). In order to make it possible to open the fibers after the casting it is necessary that Y is larger than X in such a way that a cut may be made between the surfaces defining the two penetration depths. According to the invention those two depths are controlled during the casting by exposing the inner of the housing for a positive pressure. As shown in Fig. 3a—3b this positive pressure is preferably provided by connecting the outlet 10 in any suitable way to a source of compressed air. Hereby the compressed air will penetrate as well into the fibers as around the fibers and thereafter flow out through the connections 9, 13, 14. Alternatively, as mentioned above these connections may be entirely closed, but this has appeared to be difficult to effectuate in practice. Therefore, a suitable pressure is easier to maintain in connection with a free through flow.

At the same time as a suitable pressure is provided, the dialyser is rotated around the axis A—A. Thereafter, as indicated in Fig. 3b—3c, the inlets 13 and 14 are connected with a not shown source of a casting material influenced by the centrifugal force. This casting material closes both ends of the fibers 2 at the same as it penetrates into the space between the fibers. Due to the increased pressure within the fibers and due to the compression provided by the penetration, the penetration into the fibers will be restricted. A similar compression around the fibers is not achieved and furthermore, as shown in Fig. 3c, the connection 10 may be released from the source of compressed air in such a way that the pressure will be further reduced around the fibers. As a result hereof, as shown in Fig. 3c, the penetration in the fibers will be equal to X and outside the fibers equal to Y. Thanks to this control of the pressure as well in the fibers as around the fibers, these values can be exactly determined. Hereby it is possible to save as well casting material as fiber material at the same time as the effective membrane surface may be kept within well defined tolerance limits even in connection with the production of a large number of dialysers.

Of course, the invention is not restricted only to the above described embodiment, but may be varied within the scope of the following claims. The method according to the invention may for instance be used also for the production of other devices provided with bundles of fibers than the dialyser shown as an example in Figs. 1 and 2.

## Claims

1. A method of potting a bundle (2) of open-ended hollow fibers in an outer housing (1) comprising arranging the bundle in the housing (1) with the open ends of the hollow fibers at opposite ends of the housing (1), enclosing each end of the housing (1) in a casting mold (11, 12) supplying liquid potting material to each casting mold so as to penetrate into and around the fibers at each end, the penetration being controlled in such a way that it is less into the fibers than around them so that after potting the fibers may be re-opened by a cut between the surfaces defining the respective penetration depths, characterized in that the respective penetration depth is controlled by exposing the interior of the housing (1) and the casting molds (11, 12) to a positive pressure before the liquid potting material is supplied, whereby an increased pressure is created within the fibers.

2. A method according to claim 1, characterized in that the penetration is controlled by a combination of said positive pressure and centrifugal forces provided by a rotation around an axis (A—A), which is essentially perpendicular to the longitudinal axis of the housing.

3. A method according to any of the preceding claims characterized in that the inner positive pressure in the housing (1) is reduced or entirely eliminated after that the fiber ends have been closed by the liquid potting material for the end walls (3, 4).

4. A method according to any of the preceding claims, characterized in that said positive pressure is provided by means of compressed air.

5. A method according to claim 4, characterized in that said compressed air is heated.

6. A method according to claim 5, characterized in that in connection with the embedment of fibers of regenerated cellulose in polyurethane the temperature for the compressed air is kept at a level of about 50°C.

7. A method according to any one of the preceding claims, characterized in that the positive pressure is provided via one or two side openings (9, 10) of the housing (1) arranged between the end walls (3, 4) and intended for the supply to or removal of dialysis liquid and/or filtrate.

8. A method according to any one of the preceding claims, characterized in that the positive pressure is supplied via a side opening (10) of the housing (1) under free through flow and is removed through another side opening (9).

9. A method according to any one of the claims 1—7, characterized in that the positive pressure is supplied via one opening (10) of the housing (1), the rest of the openings (9, 10, 13, 14) being closed either by the casting material or by other special means.

**Patentansprüche**

1. Verfahren zum Eingießen eines Bündels (2) offenendiger Hohlfasern in einem äußeren Gehäuse (1), bei dem man das Bündel in dem Gehäuse (1) mit den offenen Enden der Hohlfasern an entgegengesetzten Enden des Gehäuses (1) anordnet, jedes Ende des Gehäuses (1) in einer Gießform (11, 12) einschließt, flüssiges Eingießmaterial jeder Gießform derart zuführt, daß es an jedem Ende in und um die Fasern eindringt, wobei die Eindringung derart gesteuert wird, daß sie in die Fasern geringer als um sie ist, so daß nach dem Eingießen die Fasern durch einen Schnitt zwischen den die betreffenden Eindringtiefen definierenden Flächen die Fasern wieder geöffnet werden können, dadurch gekennzeichnet, daß die betreffende Eindringtiefe dadurch gesteuert wird, daß man das Innere des Gehäuses (1) und der Gießformen (11, 12) einem positiven Druck aussetzt, befor das flüssige Eingießmaterial zugeführt wird, wodurch in den Fasern ein erhöhter Druck erzeugt wird.

2. Verfahren nach Anspruch 1, dadurch gekennzeichnet, daß die Eindringung durch eine Kombination des positiven Druckes und der durch eine Rotation um eine Achse (A—A), die im wesentlichen senkrecht zur Längsache des Gehäuses ist, erzeugte Zentrifugalkräfte gesteuert wird.

3. Verfahren nach einem der vorausgehenden Ansprüche, dadurch gekennzeichnet, daß der innere positive Druck in dem Gehäuse (1) vermindert oder ganz aufgehoben wird, nachdem die Faserenden durch das flüssige Eingießmaterial für die Endwände (3, 4) verschlossen wurden.

4. Verfahren nach einem der vorausgehenden Ansprüche, dadurch gekennzeichnet, daß der positive Druck durch Preßlufteinrichtungen erzeugt wird.

5. Verfahren nach Anspruch 4, dadurch gekennzeichnet, daß die Preßluft erhitzt wird.

6. Verfahren nach Anspruch 5, dadurch gekennzeichnet, daß in Verbindung mit der Einbettung von Fasern aus regenerierter Cellulose in Polyurethan die Temperatur für die Preßluft auf einem Wert von etwa 50°C gehalten wird.

7. Verfahren nach einem der vorausgehenden Ansprüche, dadurch gekennzeichnet, daß der positive Druck über ein oder zwei Seitenöffnungen (9, 10) des Gehäuses (1) erzeugt wird, die zwischen den Endwänden (3, 4) angeordnet sind und dazu dienen, Dialyseflüssigkeit und/oder Filtrat zuzuführen oder zu entfernen.

8. Verfahren nach einem der vorausgehenden Ansprüche, dadurch gekennzeichnet, daß der positive Druck über eine Seitenöffnung (10) des Gehäuses (1) unter freiem Durchfluß und unter Entfernung durch eine andere Seitenöffnung (9) erzeugt wird.

9. Verfahren nach einem der Ansprüche 1 bis 7, dadurch gekennzeichnet, daß der positive Druck über eine Öffnung (10) des Gehäuses (1) erzeugt wird, wobei der Rest der Öffnungen (9, 10, 13, 14) entweder durch das Gießmaterial oder durch andere spezielle Mittel verschlossen ist.

**Revendications**

1. Procédé de scellement d'un faisceau (2) de fibres creuses à extrémités ouvertes dans une enveloppe extérieure (1), qui consiste à disposer le faisceau dans l'enveloppe (1) de sorte que les extrémités ouvertes des fibres creuses se trouvent aux extrémités opposées de l'enveloppe (1), à enfermer chaque extrémité de l'enveloppe (1) dans un moule de coulée (11, 12), à introduire une matière de scellement liquide dans chaque moule de coulée de façon à ce qu'elle pénètre à chaque extrémité dans les fibres et autour des fibres, la pénétration étant réglée de manière à être plus faible dans les fibres qu'autour de celles-ci, de sorte qu'après scellement on peut réouvrir les fibres par une coupe effectuée entre les surfaces définissant les profondeurs de pénétration respectives, caractérisé en ce que la profondeur de pénétration respective est réglée en soumettant l'intérieur de l'enveloppe (1) et des moules de coulée (11, 12) à une pression positive avant introduction de la matière de scellement liquide, de sorte qu'une pression accrue est engendrée à l'intérieur des fibres.

2. Procédé suivant la revendication 1, caractérisé en ce que la pénétration est reglée par une combinaison de ladite pression positive et de forces centrifuges engendrées par une rotation autour d'un axe (A—A) qui est sensiblement perpendiculaire à l'axe longitudinal de l'enveloppe.

3. Procédé suivant l'une quelconque des revendications précédentes, caractérisé en ce que la pression positive intérieure dans l'enveloppe (1) est réduite ou entièrement supprimée, après fermeture des extrémités des fibres par la matière de scellement liquide et de formation des parois d'extrémité (3, 4).

4. Procédé suivant l'une quelconque des revendications précédentes, caractérisé en ce que ladite pression positive est créée au moyen d'air comprimé.

5. Procédé suivant la revendication 4, caractérisé en ce que ledit air comprimé est chauffé.

6. Procédé suivant la revendication 5, caractérisé en ce que, dans le cas du scellement de fibres de cellulose régénérée dans du polyuréthane, la température de l'air comprimé est maintenue à une valeur de 50°C environ.

7. Procédé suivant l'une quelconque des revendications précédentes, caractérisé en ce que la pression positive est admise par un ou deux orifices latéraux (9, 10) de l'enveloppe (1), situés entre les parois d'extrémité (3, 4) et destinés à l'introduction ou à l'évacuation du liquide de dialyse et/ou du filtrat.

8. Procédé suivant l'une quelconque des revendications précédentes, caractérisé en ce que la pression positive est admise par un orifice latéral (10) de l'enveloppe (1), en écoulement traversant libre, et elle est purgée par un autre orifice latéral (9).

9. Procédé suivant l'une quelconque des revendications 1 à 7, caractérisé en ce que la pression positive est admise par un orifice (10) de l'enveloppe (1) les autres orifices (9, 10, 13, 14) étant fermés par la matière de coulée ou par d'autres moyens spéciaux.

0  165  478

Fig.1

Fig.2

Fig.3a

Fig.3b

Fig.3c